# EUROPÄISCHE PATENTSCHRIFT

(11) **EP 2 231 981 B1**
(45) Veröffentlichungstag und Bekanntmachung des Hinweises auf die Patenterteilung: **04.05.2011**
(21) Anmeldenummer: 09703287.4
(22) Anmeldetag: 20.01.2009
(51) Int. Cl.: E06B 3/10, E06B 3/263

(54) **ISOLIERENDES RAHMENELEMENT AUS HOLZ FÜR FENSTER ODER TÜREN**
INSULATING FRAME ELEMENT FOR WINDOWS AND DOORS
ÉLÉMENT DE CADRE ISOLANT EN BOIS POUR FENÊTRES OU PORTES

(30) Priorität: 23.01.2008 DE 202008000994 U; 18.12.2008 DE 202008013830 U
(43) Veröffentlichungstag der Anmeldung: 29.09.2010
(73) Patentinhaber: Holz Schiller Gmbh, 94209 Regen (DE)
(72) Erfinder: SCHILLER, Heinrich, 94209 Regen (DE); HORN, Marco, 94209 Regen (DE)
(74) Vertreter: Gustorf, Gerhard
(86) Internationale Anmeldenummer: PCT/EP2009/050592
(87) Internationale Veröffentlichungsnummer: WO 2009/092707

(56) Entgegenhaltungen:
- EP-A- 0 358 848
- DE-A1- 10 058 639
- DE-C2- 10 027 462
- DE-U1-202008 000 994
- US-A- 2 105 187

## Beschreibung

Die Erfindung betrifft ein Rahmenelement aus Holz für Fenster- oder Türrahmen mit Kanälen, die sich in Längsrichtung innerhalb des Rahmenelementes erstrecken und Luft als wärmedämmendes Medium enthalten.

Im Hausbau werden stetig wachsende Anforderungen an Maßnahmen zur Wärmedämmung gestellt, um die Energiekosten so gering wie möglich zu halten. Dies betrifft insbesondere die Fenster, aber auch die Türen, wo auf Grund von Wärmebrücken die Wärmeverluste besonders hoch sind. Es ist daher bekannt, vor allem im Fensterbereich die verschiedensten Isolierwerkstoffe wie Polyurethan, Hartschaum, Purenit oder Kork einzusetzen und damit Dämmschalen zu bilden, die dem Fensterprofil vorgelagert oder in dieses eingelagert werden.

Aus DE 100 27 462 C ist es bekannt, in Rahmenelemente für Fenster, die auch als Fensterkantel bezeichnet werden, Längsnuten einzufräsen, deren Luftfüllung den Wärmedurchgangskoeffizienten (U-Wert) für das gesamte Fenster verbessert. Die Kantel, die sowohl für Flügelrahmen als auch für Stockrahmen von Fenstern verwendet werden können, sind dabei mit schlitzförmigen Hohlräumen versehen, die sich über den gesamten Umfang des Rahmens erstrecken, so daß dadurch umlaufende Luftkanäle gebildet werden, in denen die Luft zirkuliert. Die schlitzförmigen Hohlräume dieser bekannten Kantel sind parallel zur Fenster- oder Türebene ausgerichtet und erstrecken sich über mindestens die Hälfte der Mächtigkeit des Kantels, was den Nachteil mit sich bringt, dass diese Nuten zu einer Schwächung der mechanischen Festigkeit senkrecht zur Tür- oder Fensterebene führen.

In DE 195 46 678 A1 ist ein Fenster oder eine Tür aus Profilen beschrieben und dargestellt, wobei das Profil einen Kern aus einem geschlossenzelligen Hartschaumstoff hoher Druckfestigkeit hat, der von einer aus Lamellen zusammengesetzten Schale aus Holz umgeben ist. Nachteilig bei einer derartigen Sandwichbauweise ist die Tatsache, dass der Kern, der aus extrudiertem Polystyrolhartschaum besteht, die Lebensdauer des Kantels im Vergleich zu einem insgesamt aus Holz bestehenden Kantel einschränkt. Ein weiterer Nachteil des Verbundmaterials besteht darin, dass Produktionsabfälle und auch der gesamte Rahmen als Sondermüll entsorgt werden müssen.

Der Erfindung liegt die Aufgabe zugrunde, ein Rahmenelement (Kantel) zur Verfügung zu stellen, das gegenüber dem Stand der Technik eine wesentlich verbesserte Wärmedämmung gewährleistet und gleichzeitig die Stabilität der hieraus hergestellten Rahmen verbessert.

Zur Lösung dieser Aufgabe ist ein Rahmenelement nach Anspruch 1 vorgesehen.

Auf diese Weise sind die Luftkanäle in jedem Kantel an beiden Stirnseiten verschlossen, so dass eine umlaufende Luftzirkulation im Rahmen verhindert und eine isolierende Luftschicht gebildet wird, die für eine ausgezeichnete Wärmedämmung sorgt.

In Weiterbildung der Erfindung liegen die Kanäle in rechtwinklig zur Fenster- oder Türebene ausgerichteten Querebenen, wodurch zwischen jeweils zwei benachbarten Querebenen miteinander fluchtende, durchgehende Stege ausgebildet werden. Diese Stege gewährleisten nach dem Verleimen der Holzschichten eine hohe Stabilität des Rahmenelementes in der natürlichen Belastungsrichtung gegen Winddruck und Sogkräfte.

Gemäß einer besonders bevorzugten Ausgestaltung der Erfindung schließt jedes Rahmenelement einen sich in dessen Längsrichtung erstreckenden Dämmkern ein, der aus mehreren Holzschichten besteht, in die die Kanäle als in Längsrichtung durchgehende Schlitze eingefräst sind, die auf ihrer offenen Längsseite durch eine angrenzende Trennschicht abgedeckt sind.

Nach einem Merkmal der Erfindung erstrecken sich die Trennschichten im Inneren des Dämmkerns parallel zur Fenster- oder Türebene und sind aus Kork oder Holz hergestellt.

Nach einem weiteren Merkmal der Erfindung ist es vorteilhaft, wenn der Dämmkern sowohl auf seiner nach außen als auch auf seiner nach innen weisenden Seite von jeweils einer parallel zu den Schlitzen verlaufenden Decklage aus Laubholz eingeschlossen ist, während die Holzschichten des Dämmkerns aus Nadelholz bestehen. Wesentlich für diese Weiterbildung der Erfindung ist die Tatsache, dass Nadelholz wegen seiner geringeren Dichte als Laubholz bessere U-Werte hat; das schwerere und dauerhaftere Laubholz wird dabei für die Außenlagen verwendet, die den Dämmkern einschließen und eine witterungsbeständige, dauerhafte Außenschale bilden. Als weiterer Vorteil kommt hinzu, dass durch den Dämmkern aus Nadelholz das Gesamtgewicht des Kantels insgesamt gering ist.

Ein weiterer Vorteil der Erfindung wird dann erreicht, wenn sich die von beiden Seiten spiegelsymmetrisch in die jeweilige Holzschicht des Dämmkerns eingefrästen, schlitzförmigen Kanäle über weniger als die Hälfte der Breite der Holzschicht erstrecken. Das hat zur Folge, dass der Dämmkern anstelle weniger großer Luftkanäle sehr viele kleine Kanäle hat, was die Wärmedämmeigenschaften erheblich verbessert.

Die beschriebenen Kantel eignen sich hervorragend für die Herstellung eines Stockrahmens, dem ein Flügelrahmen zugeordnet werden kann, dessen Dämmkern aus rechtwinklig zur Fenster- oder Türebene verlaufenden Lagen zusammengesetzt ist, die abwechselnd aus Nadelholz und aus Kork bestehen. Diese Alternative sorgt ebenfalls für ein geringes Gewicht des Flügelrahmens, wobei die Korklagen die Funktion der wärmedämmenden Luftkanäle übernehmen, die aus Platzgründen in Flügelkanteln nur schwierig zu realisieren sind.

Nach einem weiteren Merkmal der Erfindung ist für den Abschluss jedes Kanals an seinen beiden Enden eine kurze Holzleiste in diesen eingesetzt, deren Querschnitt dem Kanalquerschnitt entspricht. Die Verschlusselemente können aus Schnittabfällen bei der Holzverarbeitung hergestellt und in unterschiedlichen Querschnittsgrößen bereitgehalten werden. Damit steht eine sowohl effiziente als auch preiswerte Lösung zur Verfügung, die die Entsorgung wesentlich erleichtert und nachhaltig verbessert und zudem den Vorteil hat, daß bei notwendigen Fräsarbeiten oder beim Gehrungsschneiden der Kantel nur Holz bearbeitet werden muß. Auf die Lage der Kanäle muß dabei keine Rücksicht genommen werden. Der Verschluß der Kanäle kann vor dem Zusammenbau der Kantel zu einem Rahmen oder nach dem Zusammenbau zu einem Rahmenelement erfolgen.

Alternativ ist es möglich, die Kanalenden dadurch abzuschließen, dass die Schlitze im Einsatzfräsverfahren nur über einen Teilbereich der Rahmenlänge eingearbeitet werden.

Weitere Merkmale und Vorteile der Erfindung ergeben sich aus den Ansprüchen und aus der folgenden Beschreibung von Ausführungsbeispielen, die in der Zeichnung dargestellt sind. Es zeigen:
Figur 1 einen Querschnitt durch einen Stockrahmen und einen Fensterflügelrahmen, die beide aus Rahmenelementen gemäß der Erfindung hergestellt sind,
Figur 2 eine Variante der Figur 1,
Figur 3 im Querschnitt ein Kantel gemäß einer bevorzugten Ausführungsform der Erfindung vor dem Fräsen,
Figur 4 eine der Figur 3 entsprechende Darstellung nach dem Fräsen der Profilform für einen Stockrahmen,
Figur 5 eine Darstellung des Querschnitts des Stockrahmens der Figur 4 mit einem zugeordneten Flügelrahmen gemäß der Erfindung,
Figur 6 eine Variante der Figur 5,
Figur 7 die Schnittdarstellung des Kantels für den Flügelrahmen der Figur 6,
Figur 8 die perspektivische Ansicht eines Fensterkantels gemäß Figur 1 oder 2,
Figur 9 die schematische Ansicht eines Fensterkantels mit Verschlusselementen gemäß der Erfindung,
Figuren 10 und 11 zwei Varianten der Figur 9 und
Figur 12 einen Längsschnitt durch ein an den Enden verschlossenes Kantel gemäß einer weiteren Ausführungsform.

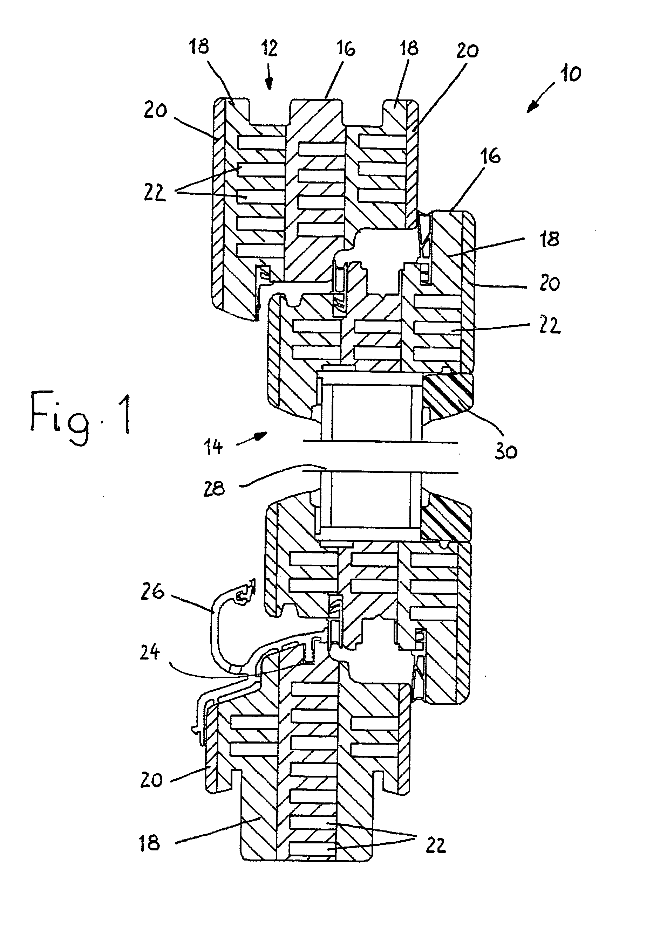

Figur 1 zeigt im Querschnitt ein Fenster 10 mit einem Stockrahmen 12 und einem Flügelrahmen 14, die beide aus Rahmenelementen (Kanteln) 16 gemäß der Erfindung hergestellt sind.

Beide Rahmenelemente 10 sind aus - im Beispiel drei - miteinander verleimten Holzschichten 18 hergestellt, die zwischen zwei Deckschichten 20 eingeschlossen sind, die ebenfalls aus Holz bestehen. In die Holzschichten 18 sind in Längsrichtung des Rahmenelementes 16 verlaufende, schlitzförmige Kanäle 22 eingearbeitet, die rechtwinklig zur Fensterebene verlaufen und aufgrund des Schichtaufbaus mit rechteckigem Querschnitt längsseitig durch die jeweils angrenzende Holzschicht 18 bzw. Deckschicht 20 abgeschlossen sind. Damit wird eine große Zahl von Kanälen 22 erzeugt, die insgesamt gegenüber dem Stand der Technik die Wärmedämmung erheblich verbessern. Als wärmedämmendes Medium sind die Kanäle 22 mit Luft gefüllt.

Aus Figur 1 ergibt sich, daß die Kanäle 22 über die Mittelebene jeder Holzschicht 18 hinaus sehr tief in diese eingefräst sind und einen geringen Abstand zueinander haben, der etwa der Breite der Kanäle 22 entspricht. Damit kann eine Vielzahl von wärmedämmenden Kanälen 22 in den Rahmenquerschnitt eingefräst werden, ohne daß dadurch die Stabilität beeinträchtigt wird. Vielmehr wirken die Kanäle 22 als stabilisierende Entspannungsnuten, wodurch die Verzugs- und Verwindungssteifigkeit erhöht wird und die eingefrästen Kanäle 22 dem Material die bei Holz anzutreffende Neigung zum Verdrehen und Krümmen beim Quellen und Schwinden nehmen.

Durch die erläuterte Geometrie und Ausrichtung der Kanäle 22 rechtwinklig zur Fensterebene ist jede Art der üblichen Eckverbindungen (Schlitz-Zapfen, Konterprofilverbindung, Gehrungs-verbindung) ohne Einbußen in der Eckenfestigkeit möglich.

In Figur 1 ist dargestellt, dass in eine Nut 24 des unteren Kantels 16 des Stockrahmens 12 in bekannter Weise eine Wetterblende 26 eingesetzt ist. Der Flügelrahmen 14 dient zur Aufnahme einer Doppelverglasung 28, die in ihrem Sitz durch eine aus dichtendem Material hergestellte Glasleiste 30 fixiert ist.

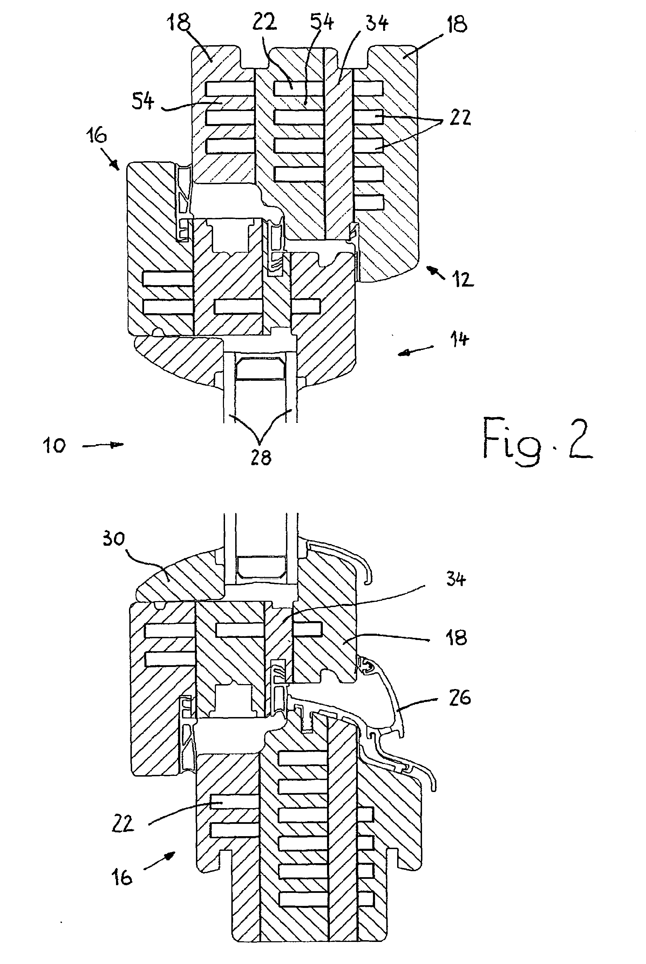

Bei der Variante der Figur 2 bestehen die Rahmenelemente 10 aus jeweils drei Holzschichten 18 ohne Deckschichten 20, was gegenüber dem Ausführungsbeispiel der Figur 1 den Vorteil hat, dass keine witterungsanfälligen Leimfugen zum Befestigen von nach außen weisenden Deckschichten erforderlich sind. Die in Figur 2 nach außen weisende, rechte Holzschicht 18 ist gegenüber der in Figur 1 nach rechts weisenden Holzschicht 18 umgedreht. Um die einander zugewandten, offenen Enden der schlitzförmigen Kanäle 22 abzuschließen, ist zwischen die rechte und die mittlere Holzschicht 18 eine Trennschicht 34 aus Holz eingesetzt.

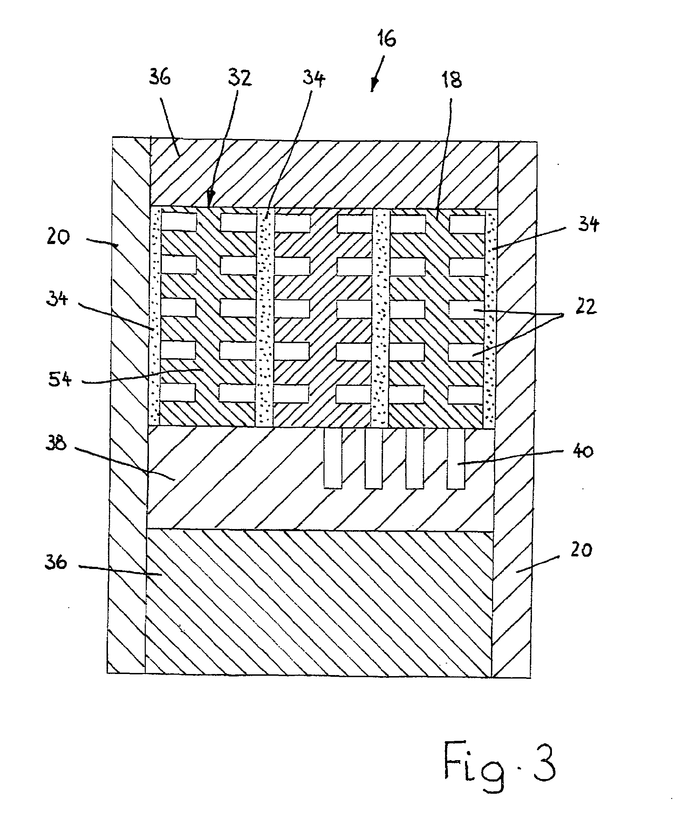

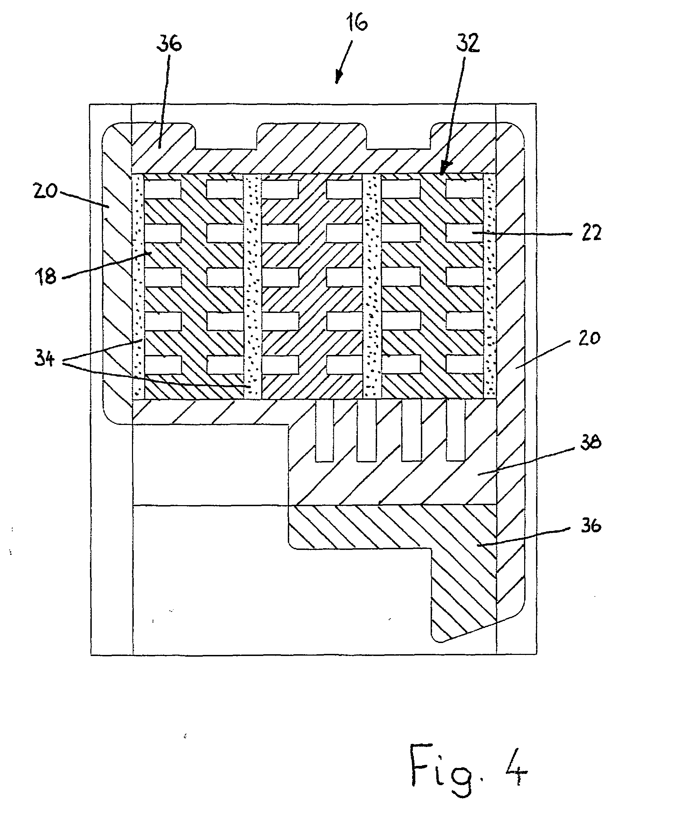

Figur 3 zeigt im Querschnitt ein Kantel 16 im Ausgangszustand vor dem Fräsen eines in Figur 4 angedeuteten Profils für ein Stockrahmenelement. Bei dieser bevorzugten Weiterbildung der Erfindung schließt das Kantel 16 einen sich in dessen Längsrichtung erstreckenden Dämmkern 32 ein, der auch hier aus drei Holzschichten 18 zusammengesetzt ist, in die die Kanäle 22 als in Längsrichtung verlaufende Schlitze eingefräst sind. Die schlitzförmigen Kanäle 22 erstrecken sich von beiden Seiten spiegelsymmetrisch in die jeweilige Holzschicht 18 über weniger als die Hälfe der Breite der Holzschicht 18, so dass gegenüber den Ausführungsbeispielen der Figuren 1 und 2 die Anzahl der Kanäle, deren Querschnitt kleiner als die Kanäle 22 der Figuren 1 und 2 sind, erheblich vergrößert ist, wodurch auch die Wärmedämmung nochmals verbessert wird. Die schlitzförmigen Kanäle 22 sind auf ihren offenen Längsseiten durch eine angrenzende Trennschicht 34 aus Kork oder Holz abgedeckt, die parallel zur Fensterebene ausgerichtet ist.

Wesentlich bei dieser Variante ist die Tatsache, dass die Holzschichten 18 des Dämmkerns 32 aus Nadelholz bestehen, beispielsweise Fichtenholz, das gegenüber dem härteren und schwereren Laubholz einen besseren Wärmedurchgangskoeffizienten hat.

Wie Figur 3 weiter zeigt, ist der Dämmkern 32 sowohl auf seiner nach außen als auch auf seiner nach innen weisenden Seite von jeweils einer parallel zu den Kanälen 22 verlaufenden Decklage 36 aus Laubholz eingeschlossen, beispielsweise Eiche oder Meranti, so dass zusammen mit den beidseitigen Deckschichten 20 aus Hartholz eine witterungsbeständige, dauerhafte Außenschale geschaffen ist.

In Figur 3 ist darüber hinaus die Möglichkeit angedeutet, zwischen den Dämmkern 32 und die nach innen weisende Decklage 36 eine weitere Schicht 38 aus Laubholz einzufügen, die auf einem Teil ihrer Breite mit Luft gefüllte Schlitze 40 hat.

Aus den Figuren 2 und 3 ergibt sich als wesentliches Merkmal, dass die Kanäle 22 in rechtwinklig zur Tür- oder Fensterebene ausgerichteten Querebenen liegen und in diesen zueinander fluchten, so dass zwischen jeweils zwei benachbarten Querebenen miteinander fluchtende, durchgehende Stege 54 gebildet sind, die für eine erhöhte Steifigkeit des Kantels 16 in Querrichtung sorgen, weil sie alle in Querrichtung wirkenden Druckkräfte aufnehmen.

In Figur 4 ist das für einen Stockrahmen 12 ähnlich der Figur 1 oder 2 zu fräsende Profil unter Verwendung des Kantels der Figur 3 eingezeichnet. Dabei ist zu erkennen, dass sich die Profilform nur über die beiden Deckschichten 20, die beiden Decklagen 36 und die Zwischenschicht 38 erstreckt, so dass der Dämmkern 32 unverändert erhalten bleibt.

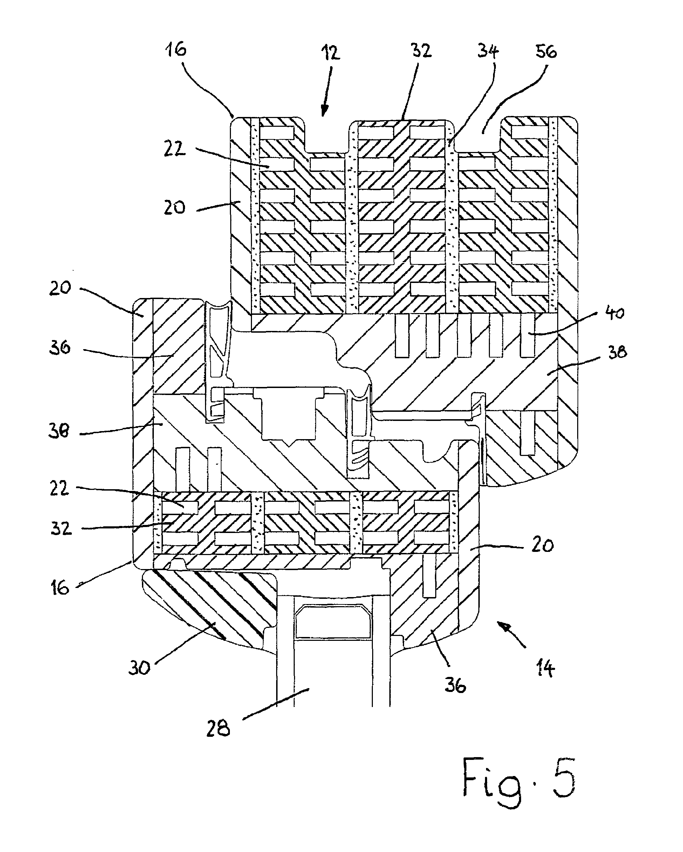

Figur 5 zeigt eine Variante für ein Rahmenelement 16 eines Stockrahmens 12, bei dem auch in die nach außen weisende Seite des Kantels 16 für den Stockrahmen 12 Fräsnuten 56 eingearbeitet sind, die sich bei eingebautem Rahmen an eine Fensteröffnung anlegen.

Das für den Flügelrahmen 14 verwendete Kantel 16 hat einen ähnlichen Aufbau wie in den Figuren 3 und 4, d.h. auch hier ist ein Dämmkern 32 vorgesehen, der aus Laubholz besteht und allseitig von zwei Decklagen 36 und zwei Deckschichten 20 aus Laubholz eingeschlossen ist.

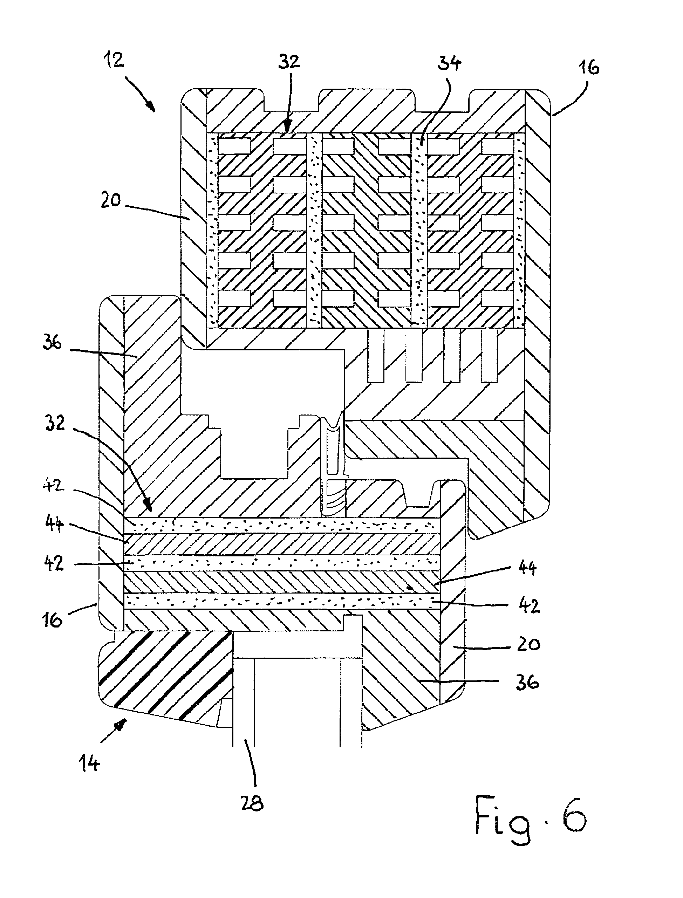

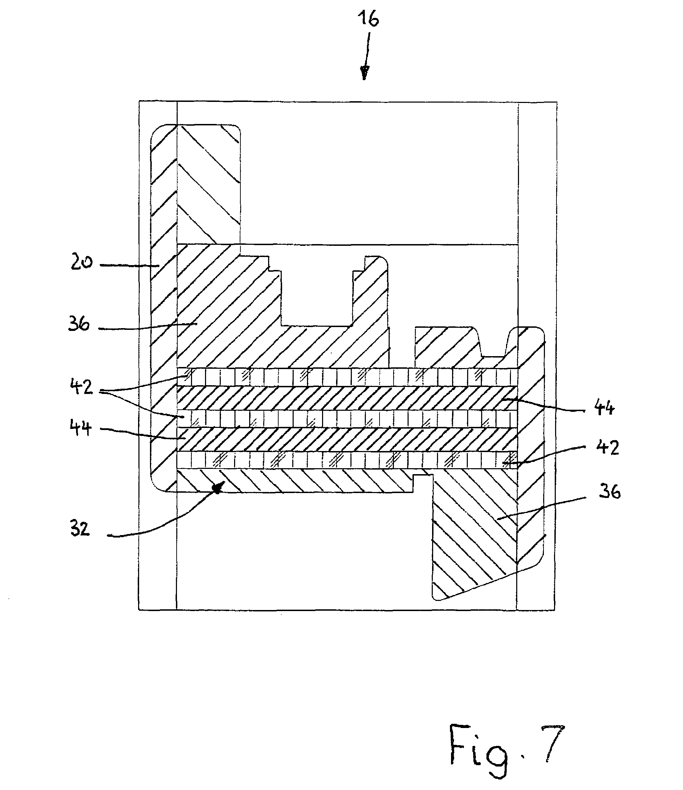

Figur 6 zeigt die Kombination eines Kantels 16 für einen Stockrahmen 12 mit einer in Figur 4 gezeigten Profilierung zusammen mit einem Kantel 16 für einen Flügelrahmen 14, der hier aus Platzgründen keine Luftkanäle 22 hat. Statt dessen ist das Flügelkantel 16, dessen Ausgangsform in Figur 7 dargestellt ist, mit einem Dämmkern 32 ausgerüstet, der aus rechtwinklig zur Fenster- oder Türebene verlaufenden Lagen 42, 44 zusammengesetzt ist, die abwechselnd aus Kork (mittlere Lage 42 und äußere Lagen 42) und aus Nadelholz (Zwischenlagen 44) bestehen.

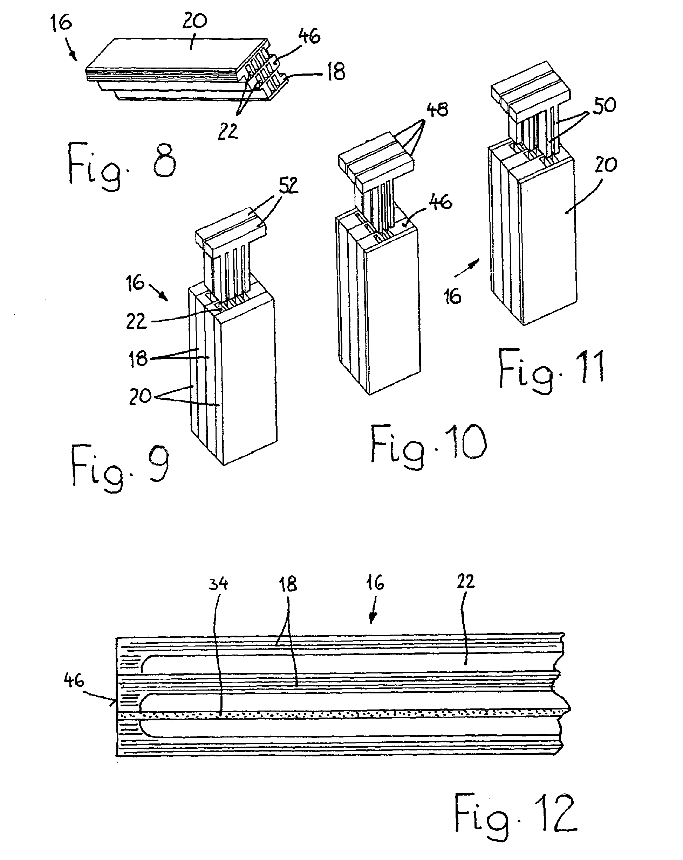

In Figur 8 ist perspektivisch ein Kantel oder Rahmenelement 16 nach der Profilierung gezeigt, wie es für einen Flügelrahmen 14 oder einen Stockrahmen 12 der Figur 1 oder 2 verwendet werden kann. Deutlich zu erkennen sind die in den einzelnen Holzschichten 18 vorgesehenen Kanäle 22, die hier stirnseitig noch offen sind.

Um die Kanäle 22 auch an den beiden Stirnseiten 46 des Rahmenelementes 16 abzuschließen, werden Verschlußelemente 48 verwendet, was sich aus den Figuren 9 bis 11 ergibt. Jedes Verschlußelement 48 hat eine Reihe von kurzen Holzleisten 50, deren Querschnitt dem rechteckigen Querschnitt der Kanäle 22 entspricht.

Die Holzleisten 50 sind für jede Holzschicht 18 an ihren nicht in die Kanäle 22 eingreifenden Enden durch einen ebenfalls ans Holz bestehenden Querriegel 52 miteinander verbunden, wobei der Abstand der einzelnen Holzleisten 50 dem Abstand der gegenüberliegenden Kanäle 22 entspricht. Diese Maßnahme erleichtert das Einsetzen der Holzleisten 50 in die Kanäle 22 und verkürzt die hierfür notwendige Zeit.

Die geschilderten Verschlußelemente 48 lassen sich aus Abfallstücken herstellen, die in Schreinerwerkstätten zur Verfügung stehen.

Um eine gute Fixierung der Holzleisten 50 innerhalb der Kanäle 22 zu gewährleisten, können die Holzleisten 50 in die Kanäle 22 eingeleimt werden.

Wie die Ausführungsbeispiele der Figuren 9 bis 11 zeigen, sind die Anzahl der Kanäle 22 und deren gegenseitige Abstände variabel und werden den Anforderungen entsprechend gewählt. Hiervon hängt die Zahl der jeweiligen Holzleisten 50 eines Verschlußelementes 48 und deren Abstand voneinander ab. Um diesen Variablen gerecht zu werden, können vorgefertigte Verschlußelemente 48 mit den entsprechenden Holzleisten 50 bereitgehalten werden, so daß alle üblichen Kanalkonfigurationen rasch geschlossen werden können.

Auf das Verschließen der Kanäle 22 mittels eigener Verschlußelemente 48 kann verzichtet werden, wenn die Rahmenelemente 16 eines Stockrahmens 12 in eine Mauer eingesetzt werden, so daß hier die gegenüberliegende Mauerseite die Kanäle 22 abschließt.

Die Verschlußelemente 48 können auch aus anders ausgebildeten Verschlußkappen wie beispielsweise plattenförmigen Abschlußelementen oder aus einem Füllmaterial bestehen, beispielsweise Holzpaste, Kleber oder PU-Material, das in die stirnseitigen Kanalenden eingesetzt wird. Das hat allerdings zur Folge, daß die Rahmenelemente 10 aus unterschiedlichen Werkstoffen bestehen.

In Figur 12 ist an einem im Längsschnitt gezeigten Kantel 16 eine besonders vorteilhafte Möglichkeit zum Verschluss der Kanäle 22 an der Stirnseite 46 des Kantels 16 dargestellt. Die Kanäle 22 sind hier nicht über die Länge durchgehend in die jeweilige Holzschicht 18 eingearbeitet, sondern durch Einsatzfräsen hergestellt, so dass sie kurz vor der Stirnseite 46 enden.

Die Erfindung kann auch bei anderen Bauelementen Verwendung finden, etwa bei Leimhölzern für Fassaden oder Wintergärten. Sie erlaubt eine industrielle Fertigung von Rahmenelementen 16 mit mehreren Holzschichten 18, in die die gewünschte Anzahl der Nuten für die Bildung der Kanäle 22 eingefräst werden, wodurch eine ökonomische und gleichzeitig ökologische Lösung des Problems der Wärmedämmung erzielt wird.

## Patentansprüche

1. Rahmenelement aus Holz für Fenster- oder Türrahmen mit Kanälen, die als Schlitze ausgebildet sind, die Luft als wärmedämmendes Medium enthalten und sich innerhalb des Rahmenelementes in dessen Längsrichtung erstrecken und an dessen beiden Stirnseiten abgeschlossen sind, **dadurch gekennzeichnet, dass** das Rahmenelement (16) aus fest miteinander verbundenen Holzschichten (18) besteht, in die die Schlitze (22) rechtwinklig zur Fenster- oder Türebene eingefräst sind, welche an ihrer offenen Längsseite in jeder Holzschicht (18) durch die jeweils angrenzende Holzschicht (18), eine Trennschicht (34) oder eine Holz-Deckschicht (20) abgeschlossen sind.

2. Rahmenelement nach Anspruch 1, **dadurch gekennzeichnet, dass** die Holzschichten (18) miteinander verleimt sind.

3. Rahmenelement nach Anspruch 1 oder 2, **dadurch gekennzeichnet, dass** jedes Rahmenelement (16) einen sich in dessen Längsrichtung erstreckenden Dämmkern (32) einschließt, der aus mehreren Holzschichten (18) besteht, in die die Schlitze (22) in Längsrichtung eingefräst und auf ihrer offenen Längsseite durch eine angrenzende Trennschicht (34) abgedeckt sind.

4. Rahmenelement nach Anspruch 3, **dadurch gekennzeichnet, dass** die Trennschichten (34) im Inneren des Dämmkerns (32) sich parallel zur Fenster- oder Türebene erstrecken und aus Kork oder Holz bestehen.

5. Rahmenelement nach Anspruch 3 oder 4, **dadurch gekennzeichnet, dass** sich die von beiden Seiten spiegelsymmetrisch in die jeweilige Holzschicht (18) eingefrästen Schlitze (22) über weniger als die Hälfte der Breite der Holzschicht (18) erstrecken.

6. Rahmenelement nach Anspruch 5, **dadurch gekennzeichnet, dass** die Schlitze (22) in Querebenen liegen, die rechtwinklig zur Fenster- oder Türebene ausgerichtet sind derart, dass zwischen jeweils zwei benachbarten Querebenen miteinander fluchtende, durchgehende Stege (54) ausgebildet sind.

7. Rahmenelement nach einem der Ansprüche 3 bis 6, **dadurch gekennzeichnet, dass** der Dämmkern (32) sowohl auf seiner nach außen als auch auf seiner nach innen weisenden Seite von jeweils einer parallel zu den Schlitzen (22) verlaufenden Decklage (36) aus Laubholz eingeschlossen ist, während die Holzschichten (18) des Dämmkerns (32) aus Nadelholz bestehen.

8. Rahmenelement nach einem der vorhergehenden Ansprüche, **dadurch gekennzeichnet, dass** für den Abschluss jedes Schlitzes (22) an dessen beiden Enden eine kurze Holzleiste (50) in diesen eingesetzt ist, deren Querschnitt dem Kanalquerschnitt entspricht.

9. Rahmenelement nach Anspruch 8, **dadurch gekennzeichnet, dass** die Holzleisten (50) in die Schlitze (22) eingeleimt sind.

10. Rahmenelement nach Anspruch 8 oder 9, **dadurch gekennzeichnet, dass** mehrere Holzleisten (50) an ihren nicht in die Schlitze (22) eingreifenden Enden zur Bildung eines Verschlusselementes (48) durch einen Querriegel (52) aus Holz miteinander verbunden sind, der im eingesetzten Zustand an der Stirnseite (46) des Rahmenelementes (16) anliegt.

11. Rahmenelement nach einem der Ansprüche 1 bis 7 **dadurch gekennzeichnet, dass** die Schlitze (22) nur über einen Teilbereich der Länge des Rahmenelementes (16) in dessen Holzschichten (18) eingearbeitet sind.

## Claims

1. Wooden frame element for window or door frames with channels in the form of slots running in the longitudinal direction within the frame element and being closed on both ends of said frame element, said slots containing air as a thermal insulation medium, **characterized in that** said frame element (16) is made of a plurality of wooden layers (18) firmly connected to each other into which said slots (22) are cut at right angles to the window or door plane, the open longitudinal side of said slots in each layer (18) being covered by the adjacent wooden layer (18) or a separating layer (34) or a wooden covering layer (20).

2. Wooden frame element according to claim 1, wherein said wooden layers (18) are bonded to each other.

3. Wooden frame element according to claim 1 or 2, wherein each frame element (16) includes an insulating core (32) that extends in the longitudinal direction of the frame element (16), said core (32) comprising a plurality of wooden layers (18) into which said slots (22) are longitudinally cut, the open longitudinal side of said slots (22) being covered by the adjacent separating layer (34).

4. Wooden frame element according to claim 3, wherein the separating layers (34) within said insulating core (32) run parallel with the window or door plane and are made of cork or wood.

5. Wooden frame element according to claim 3 or 4, wherein the slots (22) are cut dissymetrically into the corresponding wooden layer (18) from either side of it such that they extend therein less than half of the width of the layer (18).

6. Wooden frame element according to claim 5, wherein the slots (22) lie in transversal planes extending at right angles to the window or door plane such that between two adjacent transversal planes are formed continuous transversal webs (54) which are aligned with each other.

7. Wooden frame element according to any of the preceding claims 3 to 6, wherein the insulating core (32) is enclosed on its inner and on its outer side between corresponding covering layers (36) running parallel with said slots (22) and made of wood of deciduous trees, whereas the wooden layers (18) of said insulating core (32) are made of wood of coniferous trees.

8. Wooden frame element according to any of the preceding claims, wherein each slot (22) is closed on both ends by a short wood ledge (50) inserted into said slot (22), the cross section of said ledge (50) corresponding with the channel cross section.

9. Wooden frame element according to claim 8, wherein said wood ledges (50) are glued within the slots (22).

10. Wooden frame element according to claim 8 or 9, wherein in a plurality of wood ledges (50) the ends of which not inserted into said slots (22) are connected to each other by a common cross bracket (52) forming a closure element (48) that is in contact with the frontal end (46) of the frame element (16) when the ledges (50) are in the inserted position.

11. Wooden frame element according to any of the preceding claims 1 to 7, wherein the slots (22) cut in said wooden layers (18) extend only through part of the length of the frame element (16).

## Revendications

1. Élément de cadre en bois pour fenêtres ou portes avec des canaux en formes de rainures enfermant de l'air comme moyen d'isolation thermique et s'étendant longitudinalement dans le sens dudit élément et fermées aux deux extrémités, **caractérisé par le fait que** l'élément de cadre (16) se compose de plusieurs couches de bois (18) reliées entre elles et dans lesquelles les rainures (22) sont fraisées dans le sens orthogonal au plan de la fenêtre ou de la porte, lesdites rainures (22) étant recouvertes sur leur face longitudinale par la couche de bois (18) voisine ou par une couche de séparation (34) ou par une couche en bois de recouvrement (20).

2. Elément de cadre selon la revendication 1 **caractérisé par le fait que** les couches de bois (18) sont collées ensemble.

3. Elément de cadre selon la revendication 1 ou 2 **caractérisé par le fait que** chaque élément de cadre (16) enserre un noyau isolant (32) s'étendant dans le sens longitudinal de l'élément de cadre (16) et se composant de plusieurs couches de bois (18) dans lesquelles les rainures (22) sont pratiquées dans le sens longitudinal, lesdites rainures (22) étant recouvertes sur leur face longitudinale par la couche de séparation voisine (34).

4. Elément de cadre selon la revendication 3 **caractérisé par le fait que** les couches de séparation (34) à l'intérieur du noyau isolant (32) s'étendent parallèlement au plan de la fenêtre ou de la porte et sont constituées de liège ou de bois.

5. Elément de cadre selon la revendication 3 ou 4 **caractérisé par le fait que** les rainures (22) pratiquées de chaque côté dans chaque couche de bois (18) s'étendent sur moins de la largeur de la couche de bois (18).

6. Elément de cadre selon la revendication 5 **caractérisé par le fait que** les rainures (22) s'étendent dans des plans transversaux perpendiculairement au plan de la fenêtre ou de la porte, de sorte qu'entre deux plans transversaux voisins sont interposées des traverses (54).

7. Elément de cadre selon une des revendications 3 à 6 **caractérisé par le fait que** le noyau isolant (32) est enfermé sur ses côtés intérieur et extérieur par une couche de recouvrement (36) en bois de feuillus parallèlement aux rainures (22) tandis que les couches de bois (18) du noyau isolant (32) sont en bois de résineux.

8. Elément de cadre selon une des revendications précédentes **caractérisé par le fait que** les deux extrémités de chaque rainure (22) sont obturées par de courtes barrettes de bois (50) dont la section correspond à la section des canaux.

9. Elément de cadre selon la revendication 8 **caractérisé par le fait que** les barrettes de bois (50) sont encollées dans les rainures (22).

10. Elément de cadre selon la revendication 8 ou 9 **caractérisé par le fait que** plusieurs barrettes de bois (50) sont reliées entre elles sur leur côté arrière par une traverse (52) en bois reposant dans leur position rentrée sur l'extrémité (46) de l' élément de cadre (16).

11. Elément de cadre selon une des revendications 1 à 7 **caractérisé par le fait que** les rainures (22) sont pratiquées dans les couches de bois (18) seulement sur une partie de la longueur de l'élément de cadre (16).
